(19) **Europäisches Patentamt / European Patent Office / Office européen des brevets**

(11) **EP 3 950 568 B1**

(12) **EUROPEAN PATENT SPECIFICATION**

(45) Date of publication and mention
of the grant of the patent:
**10.05.2023  Bulletin 2023/19**

(21) Application number: **20777626.1**

(22) Date of filing: **24.03.2020**

(51) International Patent Classification (IPC):
**B67B 3/20** *(2006.01)*          **B67C 3/24** *(2006.01)*
**B65G 47/86** *(2006.01)*

(52) Cooperative Patent Classification (CPC):
**B67B 3/206; B65G 47/847; B67B 3/2033;**
B65G 2201/0247

(86) International application number:
**PCT/JP2020/012859**

(87) International publication number:
**WO 2020/196461 (01.10.2020 Gazette 2020/40)**

(54) **GRIPPER DEVICE PROVIDED TO CAPPER**

GREIFERVORRICHTUNG FÜR VERSCHLIESSER

DISPOSITIF DE PRÉHENSION DISPOSÉ SUR UNE CAPSULEUSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **28.03.2019  JP 2019062299**

(43) Date of publication of application:
**09.02.2022  Bulletin 2022/06**

(73) Proprietor: **Mitsubishi Heavy Industries Machinery
Systems, Ltd.
Kobe-shi, Hyogo 652-8585 (JP)**

(72) Inventors:
• **MIZUNO, Motohiro
  Kobe-shi, Hyogo 652-8585 (JP)**

• **TSUO, Atsushi
  Kobe-shi, Hyogo 652-8585 (JP)**
• **YUI, Sugihiko
  Kobe-shi, Hyogo 652-8585 (JP)**

(74) Representative: **Hoffmann Eitle
Patent- und Rechtsanwälte PartmbB
Arabellastraße 30
81925 München (DE)**

(56) References cited:
**JP-A- H06 183 551        JP-B2- S5 315 731
US-A1- 2009 014 615       US-A1- 2009 020 394**

## Description

Technical Field

The present invention relates to a gripper device provided in a capper for attaching a cap to a container.

Background Art

A resin container, for example, a PET bottle is supported on a bottom surface or a top surface of a flange formed on a neck during a process of filling a beverage, and is transported in a suspended state. The neck of the container is supported by a gripper device.

In a beverage filling system, the gripper device is used in a capping machine that applies a cap to a container, in addition to a beverage filling machine. A capping machine is also referred to as a capper, and a gripper device applied to the capper generally includes a pair of grippers that grip the neck of a container, and a support called a back plate that supports the neck of the container together with the pair of grippers. The back plate is pressed against the neck in a direction substantially orthogonal to a direction in which the pair of grippers grip the neck of the container. The neck is supported at three regions by the back plate in addition to the grippers, and this prevents the container from rotating when turning the cap to tighten around the thread of the neck.

In the same beverage filling system, plural types of containers having different sizes may be filled with a beverage. When the plural types of containers have different sized necks, a back plate suited to the size of each neck must be used in order to prevent the containers from rotating. For example, in a case where beverage filling and capping of a container having a small neck are completed and then beverage filling and capping is to be performed on a container having a large neck, it is necessary to replace the back plate suited to the small size with the back plate suited to the large size. Since the gripper devices are provided in units of several tens on the outer periphery of a rotating body called a star wheel, the work load when changing the die that replaces the back plates for all the grippers is large.

As a means for reducing the work load related to the back plates, for example, as disclosed in Patent Document 1, it has been proposed that a support (back plate) be given a function of changing position in the radial direction of the rotating body. In the gripper device including a back plate whose position in the radial direction can be changed, when the neck is large, the support is placed on a relatively inner side in the radial direction, and when the neck is small, the back plate is placed on a relatively outer side in the radial direction. Patent Document 1 discloses a gripper device according to the preamble of independent claim 1.

Citation List

Patent Literature

Patent Document 1: JP 5315731 B

Summary of Invention

Technical Problem

In the gripper device of Patent Document 1 including the back plate whose position in the radial direction can be changed, the work load is reduced as compared with a case where the back plate is replaced. However, changing the position of the back plate from an inner side to an outer side or vice versa is necessary for all gripper devices provided in the star wheel.

In view of the above, it is an object of the present invention to provide a gripper device capable of reducing work load when changing a die, which arises from handling a container having a neck size different from that in previous production.

Solution to Problem

A gripper device provided in a capper according to the present invention includes a gripper composed of a pair of gripping pieces, for gripping necks of containers, and a support configured to support the neck of the container in contact with the neck between the pair of gripping pieces.

The support in the gripper device of the present invention includes a first support and a second support corresponding to any one of the containers having different dimensions of the neck.

In the gripper device according to the present invention, the first support and the second support are alternately provided along the circumferential direction, and positions of the first support and the second support in the circumferential direction with respect to the gripper can be displaced relatively.

In the gripper device of the present invention, it is preferable that one of the first support and the second support supports the neck in contact with the neck between the pair of gripping pieces, and the other of the first support and the second support is disposed between the grippers that are adjacent to each other.

According to this gripper device, the distance for changing the position of the first support or the second support, which is not related to the support of the neck, to the position between the pair of gripping pieces related to the support of the neck is short, so that the work load for die change can be reduced. In addition, since the space between the grippers that are adjacent to each other does not contribute to the capping operation, when the first support or the second support which does not support the neck is disposed in this space, such support does not interfere with the capping operation.

The gripper device of the present invention preferably includes a movable body that supports a plurality of the first supports and a plurality of the second supports. The movable body is supported by the rotating body to be capable of a movement in the circumferential direction.

Although the present invention can also move the gripper via a movable body, the movement of the gripper in the capper involves the movement of the capping head. That is, the capping head needs to be positioned with respect to the corresponding gripper for capping, so that the capping head needs to move as the gripper moves. On the other hand, since the movement of the first support and the second support do not need to involve the movement of the capping head, the work load for die change can be reduced by setting the first support and the second support as the movable side. Moreover, by moving the movable body, the positions of the pairs of the plurality of first supports and the plurality of second supports can be collectively changed. Further, since movement in the circumferential direction is possible, the position at which the first support is engaged in supporting the neck and the position at which the second support is engaged in supporting the neck can be easily specified.

In the gripper device of the present invention, preferably, one or both of the first support and the second support are provided so as to be attachable and detachable from the movable body.

When three types of containers with different neck diameters need to be handled, if a third support is prepared in addition to the first support and the second support, the three types of containers can be handled by replacing one of the first support and the second support with the third support.

In the gripper device of the present invention, it is preferable that the gripper device further include a guide that restricts the range of movement of the movable body. This guide restricts the range of movement of the movable body within a range between a first support position at which the first support supports the neck in contact with the neck and a second support position at which the second support supports the neck in contact with the neck.

The worker performing the die change can easily move the first support to the first support position and move the second support to the second support position by merely moving the movable body along the guide.

The guide in the present invention preferably also serves as a fastening means for fixing the movable body to the rotating body. With this configuration, the number of members required for the guide can be reduced, which contributes to cost reduction of the gripper device.

The movable body according to the present invention preferably includes a plurality of segments divided along the circumferential direction, and each of the segments is preferably supported by the rotating body to be capable of movement in the circumferential direction.

Here, in the present invention, the movable body may be integrally formed. In this case, by moving the movable body only once, the positions of the first support and the second support can be changed. However, when the movable body is integrally formed, the weight increases. Nevertheless, when the movable body is divided into a plurality of segments, the weight of each segment can be reduced to facilitate the manual moving operation by the worker for die change.

When the movable body according to the present invention includes a plurality of segments, a gap corresponding to at least a distance in which the segments move is preferably provided between the segments that are adjacent to each other in the circumferential direction. Then, the plurality of segments of the movable body 31 can be moved in order so as not to overlap one another.

The movable body according to the present invention is preferably provided with a lightening portion penetrating through the front and back thereof. The lightening portion is generally intended to reduce the weight within a range that does not affect the strength of the member, and weight reduction can also be obtained as an effect of lightening in the movable body. However, the lightening portion according to the present invention not only reduces the weight, but also improves the sterilizing performance or the cleaning performance when sterilizing or cleaning the gripper device by allowing the sterilizing agent or the cleaning agent to pass through the lightening.

Advantageous Effects of Invention

According to the gripper device of the present invention, positions of the first support and the second support in a circumferential direction with respect to the gripper can be displaced relatively. In other words, according to the present invention, the work load for die change can be reduced by changing positions of the first supports and the second supports in the circumferential direction a plurality of units at a time, instead of performing die change for the support for each gripper.

Moreover, according to the gripper device of the present invention, by changing the position according to the diameter of the neck, between the pair of gripping pieces, the first support can support a neck having a large diameter in contact with the neck, and the second support can support a neck having a small diameter in contact with the neck.

Brief Description of Drawings

FIG. 1 is a plan view illustrating a gripper device according to an embodiment of the present invention, and illustrates a case of gripping a container having a large neck.

FIG. 2 is a plan view illustrating the gripper device according to an embodiment of the present invention, and illustrates a case of gripping a container having a small neck.

FIG. 3 is a plan view illustrating a movable portion in the gripper device according to an embodiment of the present invention, which corresponds to FIG. 1, and illustrates a case of gripping a container having a large neck.

FIG. 4 is a plan view illustrating a fixed portion in the gripper device according to an embodiment of the present invention, which corresponds to FIG. 1, and illustrates a case of gripping a container having a large neck.

FIG. 5 is a plan view illustrating a movable portion in the gripper device according to an embodiment of the present invention, which corresponds to FIG. 2, and illustrates a case of gripping a container having a small neck.

FIG. 6 is a plan view illustrating a fixed portion in the gripper device according to an embodiment of the present invention, which corresponds to FIG. 2, and illustrates a case of gripping a container having a small neck.

FIG. 7 is a plan view partially illustrating the gripper device according to an embodiment of the present invention, and illustrates a transition from a state of gripping a container having a small neck to a state of gripping a container having a large neck in the order of (a), (b), and (c).

FIG. 8 is a partial vertical cross-sectional view of the gripper device according to an embodiment of the present invention in a state of gripping a container.

FIG. 9 is a partial vertical cross-sectional view of the movable portion of the gripper device according to an embodiment of the present invention during movement.

FIG. 10(a) is a partially enlarged view of FIG. 8, and FIG. 10(b) is a partially enlarged view of FIG. 9.

FIG. 11 illustrates a back plate of the gripper device according to an embodiment of the present invention. FIG. 11(a) is a plan view and a side view of a back plate suited to a container having a large neck, and FIG. 11(b) is a plan view and a side view of a back plate suited to a container having a small neck.

Description of Embodiments

Hereinafter, an embodiment of the present invention will be described with reference to the accompanying drawings.

A gripper device 5 according to the present embodiment is provided in a capper for attaching a cap to a container filled with a beverage. The gripper device 5 can reduce work load related to a back plate even when the object to be filled with a beverage is replaced with a container having a neck of a different size. This reduction in work load is achieved by changing the positions of a plurality of the back plates collectively in the circumferential direction. The gripper device 5 processes two types of containers having different sized necks, and one having a larger size is defined as a container 100L and the other having a smaller size is defined as a container 100S. When size is not an issue, the container is simply referred to as a container 100.

A circumferential direction C in the present embodiment refers to the rotational direction of the gripper device 5, and the radial direction in the present embodiment refers to a radial direction R of the rotation radius of the gripper device 5.

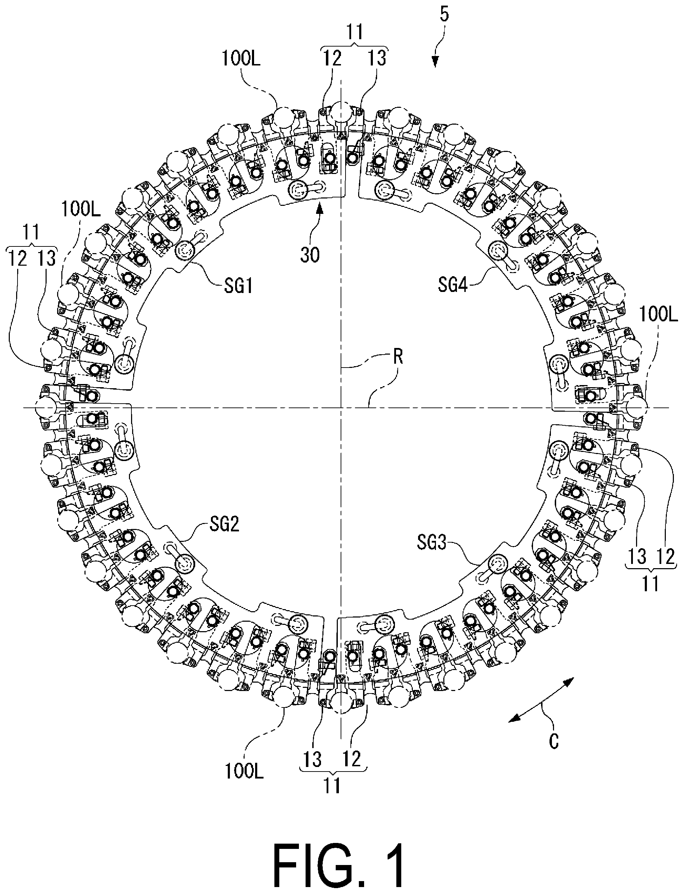

As illustrated in FIGS. 1, 2, 4 and 6, the gripper device 5 includes a star wheel 10 and a movable portion 30 capable of reciprocating in the circumferential direction C with respect to the star wheel 10. Here, the star wheel 10 functions as a fixed portion whose position is fixed, when the operation of the gripper device 5 accompanying the operation of the capper is stopped and the operation of changing the position in the circumferential direction C of the movable portion 30, which substitutes for the die change, is performed. When the gripper device 5 is in operation, the star wheel 10 carries out rotationally moves together with the movable portion 30.

In the present embodiment, the position of the back plate in the circumferential direction C may be changed by providing the gripper on the star wheel 10 side and providing the back plate (support) on the movable portion 30 side. However, in the present invention, on the contrary, a back plate may be provided on the star wheel 10 side and a gripper may be provided on the movable portion 30 side. In this case as well, the back plate can change its relative position with respect to the gripper in the circumferential direction C.

Hereinafter, the configurations of the star wheel 10 and the movable portion 30 will be described in this order, and then a procedure for changing the position of the back plate in the circumferential direction C according to the movement of the movable portion 30 in the circumferential direction C will be described.

Star Wheel 10

The star wheel 10 will be described with reference to FIGS. 1, 2, 4, 6 and 8.

The star wheel 10 supports a plurality of grippers 11 and is rotated by a drive source (not illustrated).

Each gripper 11 includes a pair of a first gripping piece 12 and a second gripping piece 13. The first gripping piece 12 swings about a first rocker shaft 12A by rotating forward and backward within a predetermined angle range. The second gripping piece 13 swings about a second rocker shaft 13A by rotating forward and backward within a predetermined angle range.

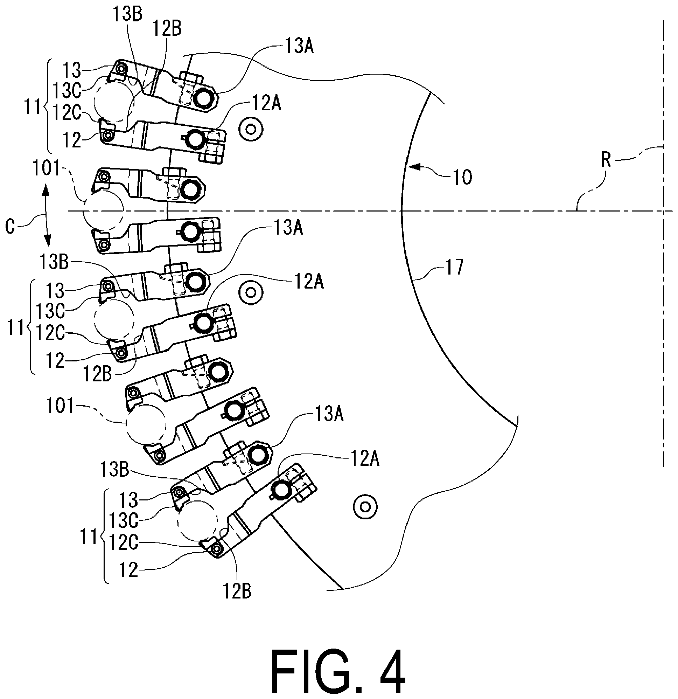

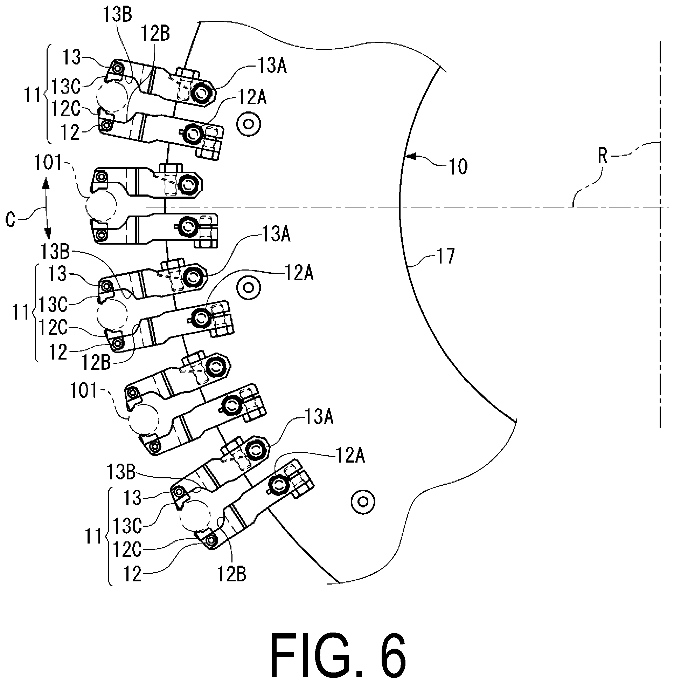

As illustrated in FIGS. 4 and 6, the first gripping piece 12 includes a depression 12B formed in a region on the tip side separated outward in the radial direction R from the first rocker shaft 12A, and a gripping claw 12C provided at a position closer to the tip side than the depression 12B. Similarly, the second gripping piece 13 includes a depression 13B formed in a region on the tip side separated outward from the second rocker shaft 13A in the radial direction R, and a gripping claw 13C provided at a position closer to the tip side than the depression 13B.

The depression 12B and the depression 13B are provided to avoid interference between the first gripping piece 12, the second gripping piece 13 and a neck 101 of the container 100 when the neck 101 is gripped by the gripping claw 12C and the gripping claw 13C. The depression 12B and the depression 13B are provided to avoid interference between the first gripping piece 12 and the second gripping piece 13, and the first support 33 and the second support 35.

The gripping claw 12C and the gripping claw 13C are portions directly related to the gripping of the neck 101, and grip the neck 101 by forces with components having directions opposite to each other.

The depression 12B and the depression 13B, as well as the gripping claw 12C and the gripping claw 13C are formed into the same shape and with the same dimensions, respectively, and are disposed at positions that are mutually line symmetrical with respect to the center line in the radial direction R between the first gripping piece 12 and the second gripping piece 13.

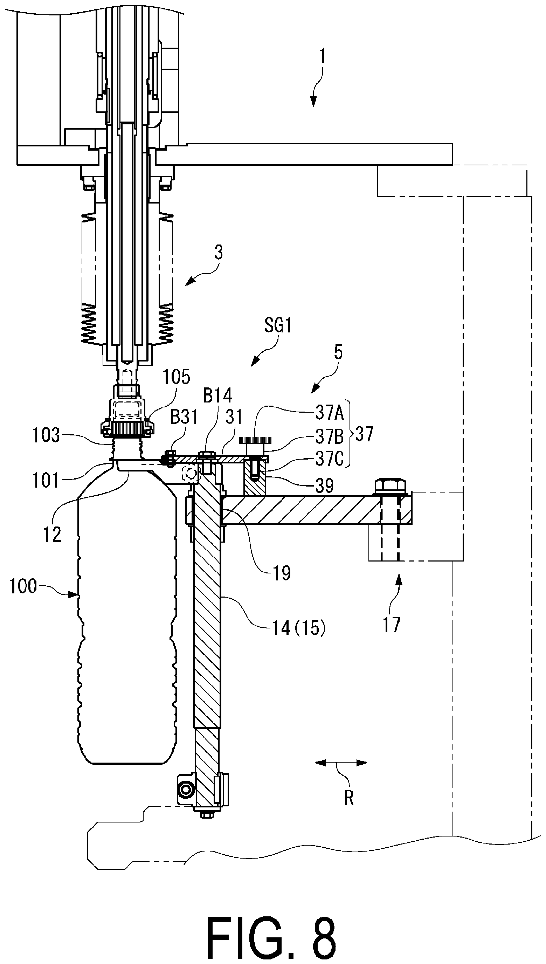

As illustrated in FIG. 8, the star wheel 10 includes a first rotor shaft 14 that causes the first gripping piece 12 to swing. The first rotor shaft 14 is capable of rotating forward and backward around the first rocker shaft 12A, and an upper end of the first rotor shaft 14 is fixed by a bolt B14. The first rotor shaft 14 is provided so as to penetrate through the front and back of the outer peripheral side of the star wheel 10, and is rotated forward or backward by applying a rotational force to the lower end portion of the first rotor shaft 14. A slide bearing 19 is provided between the first rotor shaft 14 and the star wheel 10. When a rotational force is applied to the lower end portion of the first rotor shaft 14, the first rotor shaft 14 rotates forward or backward while being slidably supported by the star wheel 10, whereby the first gripping piece 12 swings.

A second rotor shaft 15 for swinging the second gripping piece 13 is supported by the star wheel 10 by the same structure as the first rotor shaft 14, and is rotated forward or backward.

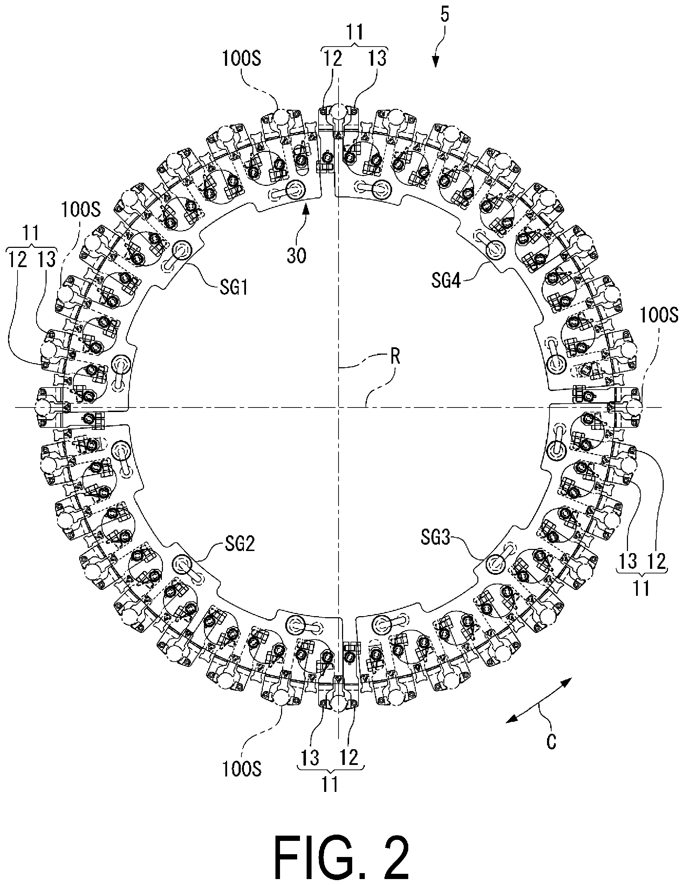

As illustrated in FIGS. 1 and 2, the star wheel 10 includes 32 grippers 11 arranged at equal intervals in the circumferential direction C.

Movable Portion 30

Next, the movable portion 30 in the gripper device 5 will be described.

As illustrated in FIGS. 1, 2, 3, and 5, the movable portion 30 includes four segments divided in the circumferential direction C, that is, a segment SG1, a segment SG2, a segment SG3, and a segment SG4, and the four segments SG1 to SG4 each having an arc shape are arranged so as to form a circle. The segments SG1 to SG4 are disposed in different locations but have the same configuration. Therefore, the movable portion 30 will be described using the segment SG1 as an example.

The segment SG1 includes a movable body 31 having an arc shape, and a plurality of first back plates (first supports) 33 and second back plates (second supports) 35 retained by the movable body 31.

The movable body 31 includes an outer peripheral edge 31A and an inner peripheral edge 31B. The first back plates 33 and the second back plates 35 are alternately disposed at equal intervals on the outer peripheral edge 31A. In addition, three position adjustment guide grooves 31C extending through the front and back of the movable body 31 are formed on the inner peripheral edge 31B. A knob 37 is inserted into each of the three position adjustment guide groove 31C and the knob 37 constitute the guide according to the present invention. As illustrated in FIG. 8, the knob 37 includes a head 37A, a shank 37B connected to the head 37A, and a screw portion 37C connected to the shank 37B. The knob 37 is a fastening means for fixing the movable body 31 to the star wheel 10.

In the movable body 31, a lightening portion 31D extending through the front and back of the movable body 31 is formed between the outer peripheral edge 31A and the inner peripheral edge 31B. As an example, eight lightening portions 31D are provided along the circumferential direction C, seven of which are circular and one of which is racetrack-shaped.

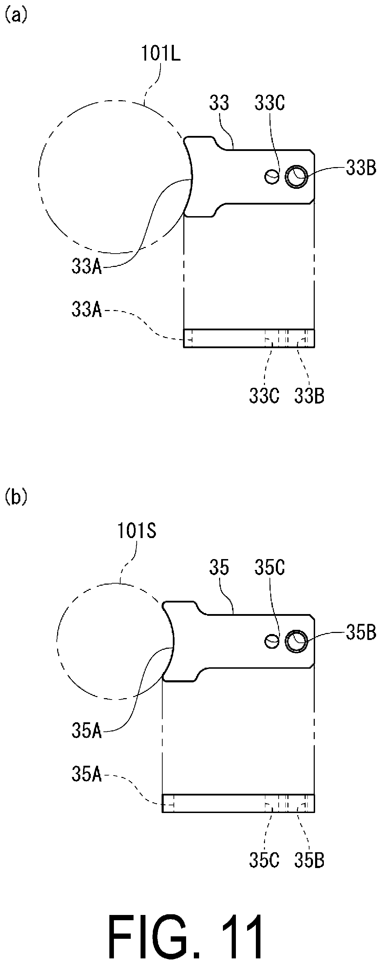

As illustrated in FIG. 11(a), the first back plate 33 has a substantially rectangular planar shape, and a support surface 33A formed of a curved surface having a curvature matching the outer periphery of the neck 101 is formed at a portion supporting the neck 101 of the container 100. The first back plate 33 has a bolt hole 33B and a pin hole 33C used for fixing the first back plate 33 to the movable body 31. The bolt hole 33B and the pin hole 33C penetrate the first back plate 33 in the thickness direction.

As illustrated in FIG. 11(b), the second back plate 35 has the same configuration as the first back plate 33, and includes a support surface 35A, a bolt hole 35B, and a pin hole 35C. However, the dimension of the first back plate 33 in the longitudinal direction is shorter than that of the second back plate 35. This is because, as illustrated in FIGS. 11(a) and 11(b), the first back plate 33 corresponds to the container 100L having a large diameter of a neck 101L, while the second back plate 35 corresponds to the container 100S having a small diameter of a neck 101S.

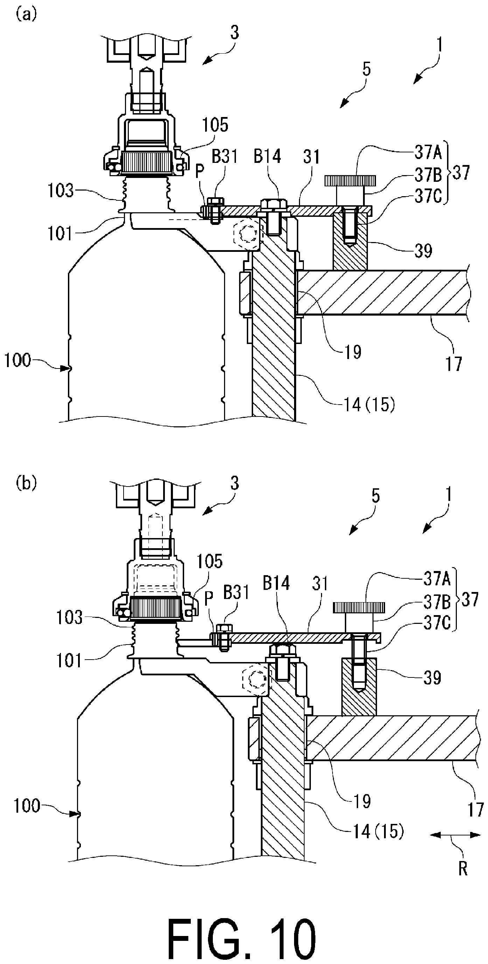

The first back plate 33 and the second back plate 35 are attached to the bottom surface of the outer peripheral edge 31A of the movable body 31. As illustrated in FIGS. 10(a) and 10(b), this attachment is realized by inserting a pin P retained by the movable body 31 into the pin holes 33C and 35C in addition to screwing a bolt B31, which has penetrated through the movable body 31, into the bolt holes 33B and 35B. That is, the first back plate 33 and the second back plate 35 are fixed by the bolt B31, and are restricted from rotating about the bolt B31 by the pin P.

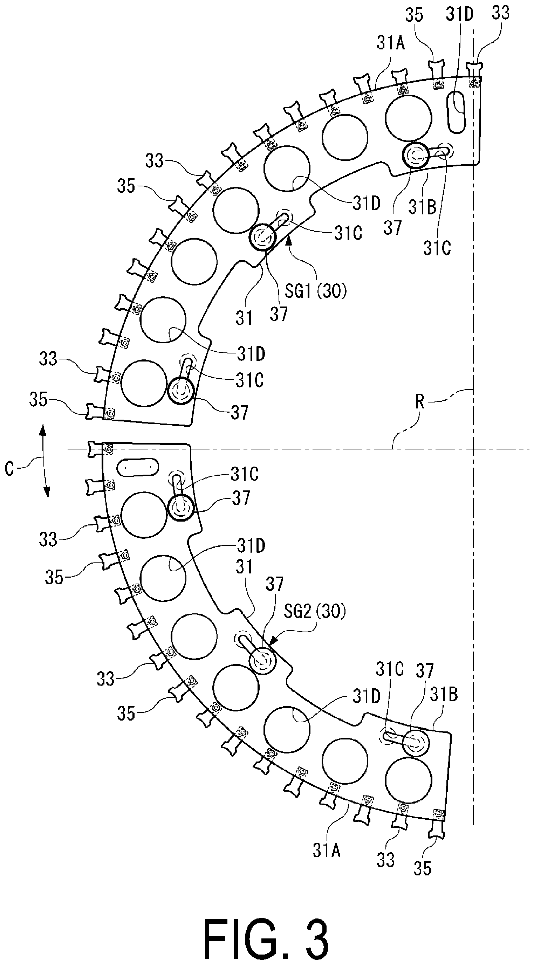

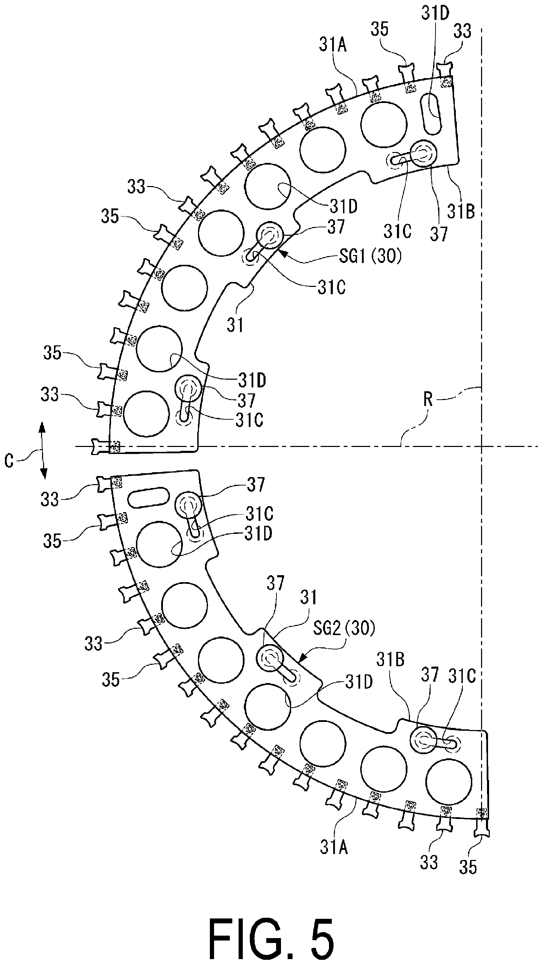

Next, as illustrated in FIGS. 8 and 10(a), the movable body 31 including the first back plate 33 and the second back plate 35 is fixed to the star wheel 10 with a spacer 39 interposed therebetween. The spacer 39 is a columnar member, the lower end of which is fixed to the top surface of the star wheel 10. The inner peripheral edge 31B side of the movable body 31 is mounted on the upper end of the spacer 39. The movable body 31 mounted on the spacer 39 is fixed by the knob 37, which extends through the position adjustment guide groove 31C of the movable body 31 and is screwed into the spacer 39. As illustrated in FIGS. 3 and 5, one movable body 31 is fixed by three knobs 37.

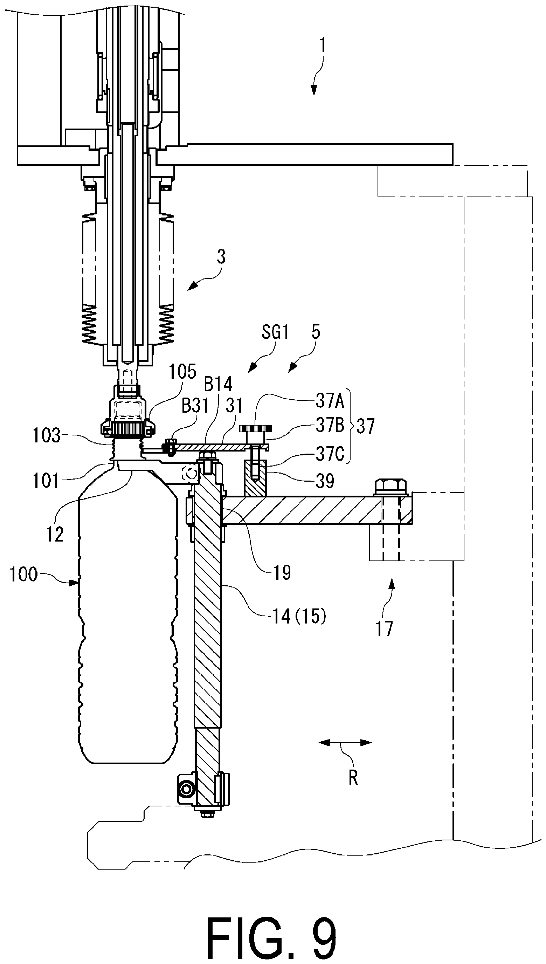

As illustrated in FIGS. 9 and 10(b), when the screwing of the knob 37 is loosened to some extent, the movable body 31 can be lifted up until it abuts against the shank 37B of the knob 37. When the movable body 31 is lifted up to this position, the movable body 31 can be moved without being hindered by the bolt B 14 that fixes the gripper 11. Here, since the tip portion of the screw portion 37C remains screwed, the movable body 31 can reciprocate in the circumferential direction within a range specified by the position adjustment guide groove 31C.

As illustrated in FIGS. 3 and 5, the first back plate 33 and the second back plate 35 are provided as a pair on the movable body 31.

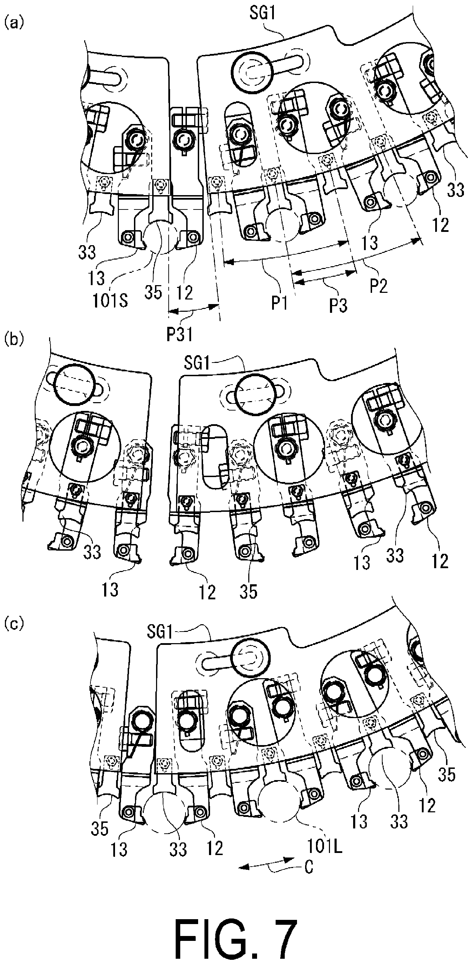

When a cap 105 is attached to the container 100L having a large diameter at the neck 101L, as illustrated in FIGS. 1 and 7(c), the first back plate 33 is disposed between the first gripping piece 12 and the second gripping piece 13 of the gripper 11. The first back plate 33 disposed at this position supports the neck 101 of the container 100. This position is referred to as a first support position. At this time, the paired second back plate 35 is disposed between grippers 11 that are adjacent to each other, and does not contribute to the support of the container 100. This position is referred to as a first non-support position.

When the cap 105 is attached to the container 100S having a small diameter at the neck 101S, as illustrated in FIGS. 2 and 7(a), the second back plate 35 is disposed at a second support position between the first gripping piece 12 and the second gripping piece 13 of the gripper 11. The second back plate 35 disposed at the second support position supports the neck 101S of the container 100S. At this time, the paired first back plate 33 is disposed at a second non-support position between the grippers 11 that are adjacent to each other, and does not contribute to the support of the container 100.

In this manner, each of the first back plate 33 and the second back plate 35 are placed at either of the first support position and the second support position depending on the relationship with the first gripping piece 12 and the second gripping piece 13 of the gripper 11. In order to realize this positional relationship, it is necessary to satisfy the following conditions.

As illustrated in FIG. 7(a), an interval between adjacent first back plates 33 is defined as P1, an interval between adjacent second back plates 35 is defined as P2, and an interval between the first back plate 33 and the second back plate 35 that are adjacent to each other is defined as P3. The interval P3 corresponds to a distance by which the movable body 31 changes position at the time of the die change. Then, by satisfying the following equation (1), each of the first back plate 33 and the second back plate 35 is placed at any one of the first support position, the second support position, the first non-support position, and the second non-support position.

$$P1 = P2 = 2 \times P3 \qquad (1)$$

In addition, a gap P31 is provided between the adjacent movable bodies 31, and the relationship (2) is satisfied. The gap P31 is provided so that, for example, when the position of the segment SG1 is changed at the time of die change, the adjacent segment SG2 does not become an obstacle for changing the position. That is, when there is no such gap, even if an attempt is made to change the position of the segment SG1, the position of the segment SG1 cannot be changed due to the obstruction of the adjacent segment SG2.

$$P3 < P31 \qquad (2)$$

The gripper device 5 forms a part of a capper 1 which, as illustrated in FIGS. 8 and 9, includes a capping head 3. The capping head 3 attaches the cap 105 to the container 100 by turning the cap 105 to tighten around a mouth portion 103 of the container 100. Although not illustrated, 32 capping heads 3, for example, are provided along the circumferential direction C, each of which corresponds to each of the plurality of grippers 11. Each capping head 3 rotates with the rotation of the star wheel 10.

Operation of Gripper Device 5

Next, the die change operation of the gripper device 5 will be described.

The gripper device 5, together with the capping head 3, as part of the capper, attaches the cap 105 to the container 100 by turning the cap 105 to tighten around the mouth portion 103 of the container 100. The attachment of the cap 105 is performed while the capper 1 rotates, and the cap 105 is attached between the time when the gripper 11 receives the container 100 at the receiving position and the time when the gripper 11 transfers the container 100 to the next process at a transferring position.

In the beverage filling system including the capper, for example, it is assumed that the operation of filling the beverage into the container 100L and attaching the cap 105 in the capper 1 is performed, and processes such as the beverage filling and the cap attachment for a scheduled number of containers are completed. Thereafter, it is assumed that processes such as filling the container 100S with a beverage and attaching a cap are performed.

In the process for the container 100L, as illustrated in FIG. 7(c), the first back plate 33 is disposed at the first support position in any of the segments SG1 to SG4. When the processing target is changed to the container 100S after this, as illustrated in FIG. 7(a), the movable body 31 to which the first back plate 33 and the second back plate 35 are attached is moved in each of the segments SG1 to SG4 via a state as illustrated in FIG. 7(b). To be more specific, the movable body 31 is moved in the circumferential direction C by a distance corresponding to the above-described interval P3 between the first back plate 33 and the second back plate 35. As a result, the first back plate 33, which has been in the first support position, changes its position to the second non-support position, and the second back plate 35, which has been in the first non-support position, changes its position to the second support position.

When the processing target is changed from the container 100S to the container 100L, it is only required to move the movable body 31 in a direction opposite to the above.

The positions of the first back plate 33 and the second back plate 35 are changed in the following procedure.

While the capping operation is performed, the knob 37 is tightened as illustrated in FIG. 8, and when the capping operation is completed, the knob 37 is loosened. All the knobs 37 are loosened.

When all the knobs 37 are loosened, the movable body 31 is lifted up and moved in the circumferential direction C as illustrated in FIG. 9 for each segment. The amount of movement of the movable body 31 at this time is restricted to P3 due to the locking relationship between the knob 37 and the position adjustment guide groove 31C. When the movable body 31 moves by P3, the movable body 31 is lowered to the original position, and then the knob 37 is tightened. When the tightening is finished, filling of the beverage into the next container 100S and capping can be started.

Effects of Embodiments

Next, effects of the gripper device 5 according to the present embodiment will be described.

Basic Effects

In the gripper device 5, when the movable body 31 to which the plurality of first back plates 33 and second back plates 35 are alternately attached is moved by the pitch P3 in the circumferential direction C, the first back plates 33 can be changed to the second back plates 35 or vice versa only by one operation for the eight grippers 11. When the gripper device 5 is considered as a whole, when each movable body 31 belonging to each of the segments SG1 to SG4 is moved, the die change is completed for the 32 grippers 11.

The reason why the plurality of first back plates 33 and second back plates 35 can be collectively moved as above, by the movement of the movable body 31, is that the first back plates 33 and the second back plates 35 are configured to be displaceable in the circumferential direction C.

As described above, according to the gripper device 5, the load required for the die change of the first back plate 33 and the second back plate 35 can be significantly reduced.

Effect by Segments SG1 to SG4

Next, the gripper device 5 divides the movable portion 30 into four segments SG1 to SG4. Here, in the present invention, the movable portion 30 may be integrally formed. According to this, there is an advantage that the positions of the first back plate 33 and the second back plate 35 can be changed by moving the movable portion 30 only once. However, when the movable portion 30 is integrally formed, the weight is increased, so that it is necessary to resort to a machine. Nevertheless, when the movable portion 30 is divided into the segments SG1 to SG4 as in the present embodiment, the movable body 31 corresponding to each segment can be manually moved.

In the present embodiment, four segments are provided, but this is merely an example and the number of segments is arbitrary. However, considering the manual work to be performed and the number of times the movable body 31 is moved, the number of segments is suitably in the range of from 2 to 6.

Gap P31 between Movable Bodies 31

In the gripper device 5, since the gap P31 exceeding the interval P3, by which the movable body 31 changes its position in the circumferential direction C at the time of die change, is provided between the movable bodies 31, the movable bodies 31 can be moved one by one. This ensures that the effects of dividing the movable portion 30 into the segments SG1 to SG4 can be achieved.

Attachment/Detachment of First Back Plate 33 and Second Back Plate 35

Next, in the movable portion 30, the movable body 31, the first back plate 33, and the second back plate 35 were manufactured as separate bodies, and were fixed so as to be attachable and detachable by fastening.

Here, the first back plate 33 and the second back plate 35 may be manufactured so as not to be attachable and detachable from the movable body 31. For example, the above can be applied to a case where the movable body 31, the first back plate 33, and the second back plate 35 are integrally fabricated as a cast. In addition, this can also be applied to a case where, although the movable body 31, the first back plate 33 and the second back plate 35 are separately manufactured, the first back plate 33 and the second back plate 35 are fixed to the movable body 31 by welding. The present invention includes the movable portion 30 in these forms, and is effective for cost reduction.

However, when it is necessary to process three kinds of containers 100 having different diameters of the neck 101, if the first back plate 33 and the second back plate 35 are not attachable and detachable, it is necessary to prepare the movable body 31 including another back plate. This leads to an increase in cost. On the other hand, in the case of the first back plate 33 and the second back plate 35 that are attachable and detachable by fastening, by preparing a third back plate and replacing one of the first back plate 33 and the second back plate 35 with the third back plate, there is no need to prepare a new movable body 31. As described above, by adopting the first back plate 33 and the second back plate 35 which are attachable and detachable by fastening as in the present embodiment, three or more types of containers 100 can be processed at low cost.

Lightening of Movable Body 31

The movable body 31 of the present embodiment is provided with a substantial number of lightening portions 31D. The lightening portions 31D are generally intended to reduce weight within a range that does not affect the strength of the member, and weight reduction can also be obtained as an effect of lightening in the movable body 31. However, the lightening portions 31D in the present embodiment not only reduce the weight but also improve the sterilizing performance or the cleaning performance when sterilizing or cleaning the gripper device 5.

In other words, a sterilizing agent is sprayed from above to sterilize the gripper device 5 or a cleaning agent is sprayed from above to clean the gripper device 5, but the movable body 31 may hinder the sterilizing agent or the cleaning agent from reaching the lower gripper 11. In order to solve this problem, the sterilizing agent or the cleaning agent may be sprayed onto the gripper device 5 from the side. However, in this case, it is necessary to perform the operation of spraying the sterilizing agent or the cleaning agent from the side in addition to the operation of spraying the sterilizing agent or the cleaning agent from above. However, since the movable body 31 is provided with the lightening portions 31D in a substantial range of the surface area of the movable body 31, the sterilizing agent or the cleaning agent sprayed from above easily passes through the movable body 31 and easily reaches the gripper 11. Therefore, according to the gripper device 5, the sterilizing performance or the cleaning performance of the gripper device 5 can be ensured without performing the operation of spraying the sterilizing agent or the cleaning agent from the side in addition to the operation of spraying the sterilizing agent or the cleaning agent from above.

Configuration of Movable Portion 30

In the gripper device 5, the movable body 31 including the first back plate 33 and the second back plate 35 may be moved in accordance with the die change of the first back plate 33 and the second back plate 35.

Here, the present invention allows a configuration in which the positions of the first back plate 33 and the second back plate 35 are fixed and the positions of the grippers 11 are changed. That is, the present invention includes a second embodiment in which the first back plate 33 and the second back plate 35 are fixed portions and the grippers 11 are movable portions. However, when the second embodiment is adopted, it is necessary not only to change the positions of the grippers 11 but also to change the positions of the corresponding capping heads 3 in accordance with the movement of the grippers 11.

On the other hand, according to the gripper device 5 of the first embodiment, since only the movable body 31 including the first back plate 33 and the second back plate 35 needs to be changed in position in accordance with the die change, the work load is lighter than that in the second embodiment.

Besides the above-described embodiment, as long as there is no departure from the spirit of the present invention, configurations explained in the above-described embodiments can be selected as desired, or can be changed to other configurations as appropriate.

In the gripper device used in the capper, in order to prevent the container from rotating when turning the cap to tighten around the mouth portion, a detent may be provided in a portion that grips and supports the neck 101. The gripper device of the present invention can follow this. That is, in the present invention, the pair of gripping pieces 12, 13 can be provided with a detent, the first back plate 33 and the second back plate 35 can be provided with a detent, or the pair of gripping pieces 12, 13, as well as the first back plate 33 and the second back plate 35, can be provided with a detent. As the detent, typically, a minute projection is used.

Although the gripper device according to the present embodiment is used in the capper 1, this shall not preclude the gripper device according to the present invention from being applied to other uses.

Reference Signs List

1 Capper
3 Capping head
5 Gripper device
10 Star wheel
11 Gripper
12 First gripping piece
12A First rocker shaft
12C Gripping claw
13 Second gripping piece
13A Second rocker shaft
13C Gripping claw
14 First rotor shaft
15 Second rotor shaft
19 Slide bearing
30 Movable portion
31 Movable body
31A Outer peripheral edge
31B Inner peripheral edge
31C Position adjustment guide groove
31D Lightening portion
33 First back plate (first support)
33A Support surface
33B Bolt hole
33C Pin hole
35 Second back plate (second support)
35A Support surface
35B Bolt hole
35C Pin hole
37 Knob
37A Head
37B Shank
37C Screw portion
39 Spacer
100, 100L, 100S Container
101, 101L, 101S Neck
103 Mouth portion
105 Cap

**Claims**

1. A gripper device provided in a capper (1), the gripper device comprising:

   a gripper (11) including a pair of gripping pieces (12, 13) configured to grip necks (101) of containers (100); and
   a support configured to support the neck (101) of the container (100), in contact with the neck (101), between the pair of gripping pieces (12, 13),
   **characterized in that**
   the support includes a first support (33) and a second support (35) corresponding to either of the containers (100) having the necks (101) with different dimensions;
   the first support (33) and the second support (35) are alternately provided along a circumferential direction; and
   positions of the first support (33) and the second support (35) in the circumferential direction with respect to the gripper (11) can be displaced relatively.

2. The gripper device according to claim 1, wherein

   one of the first support (33) and the second support (35) supports the neck (101) in contact with the neck between the pair of gripping pieces (12, 13); and
   the other of the first support (33) and the second support (35) is disposed between the grippers (11) that are adjacent to each other.

3. The gripper device according to claim 1 or 2, further comprising a movable body (31) configured to support a plurality of the first supports (33) and a plurality of the second supports (35), wherein
   the movable body (31) is supported by a rotating body (10) in a manner such that the movable body (31) can move in the circumferential direction.

4. The gripper device according to claim 3, wherein one or both of the first support (33) and the second support (35) are attachably and detachably provided with respect to the movable body (31).

5. The gripper device according to claim 3 or 4, further comprising a guide (31C, 37) configured to regulate a range of the movement of the movable body (31), wherein
   the guide (31C, 37) regulates the range of the movement of the movable body (31) within a range between a first support position at which the first support (33) supports the neck (101) in contact with the neck and a second support position at which the second support (35) supports the neck (101) in contact with the neck.

6. The gripper device according to claim 5, wherein the guide (37) also serves as a fastening means for fixing the movable body (31) to the rotating body (10).

7. The gripper device according to any one of claims 3 to 6, wherein

   the movable body (31) has a plurality of segments (SG1, SG2, SG3, SG4) divided in the circumferential direction; and

each of the segments (SG1, SG2, SG3, SG4) is supported by the rotating body (10) in a manner such that each of the segments (SG1, SG2, SG3, SG4) can perform the movement in the circumferential direction.

8. The gripper device according to claim 7, wherein a gap (P31) corresponding to at least a distance of the movement by the segment is provided between the segments (SG1, SG2, SG3, SG4) that are adjacent to each other in the circumferential direction.

9. The gripper device according to any one of claims 3 to 8, wherein the movable body (31) includes a lightening portion (31D) that extends through the front and back of the movable body (31).

**Patentansprüche**

1. Greifervorrichtung, die in einem Verschließer (1) bereitgestellt ist, wobei die Greifervorrichtung umfasst:

einen Greifer (11), der ein Paar von Greifstücken (12, 13) einschließt, die so konfiguriert sind, dass sie Hälse (101) von Behältern (100) greifen; und

eine Stütze, die so konfiguriert ist, dass sie den Hals (101) des Behälters (100) in Kontakt mit dem Hals (101) zwischen dem Paar von Greifstücken (12, 13) stützt,

**dadurch gekennzeichnet, dass**

die Stütze eine erste Stütze (33) und eine zweite Stütze (35) einschließt, die jeweils einem der Behälter (100) mit den Hälsen (101) mit unterschiedlichen Abmessungen entsprechen;

die erste Stütze (33) und die zweite Stütze (35) abwechselnd entlang einer Umfangsrichtung bereitgestellt sind; und

Positionen der ersten Stütze (33) und der zweiten Stütze (35) in der Umfangsrichtung in Bezug auf den Greifer (11) relativ verschoben werden können.

2. Greifervorrichtung nach Anspruch 1, wobei

eine von der ersten Stütze (33) und der zweiten Stütze (35) den Hals (101) in Kontakt mit dem Hals zwischen dem Paar von Greifstücken (12, 13) stützt; und

die andere von der ersten Stütze (33) und der zweiten Stütze (35) zwischen den Greifern (11) angeordnet ist, die aneinander angrenzen.

3. Greifervorrichtung nach Anspruch 1 oder 2, weiter umfassend einen beweglichen Körper (31), der so konfiguriert ist, dass er eine Vielzahl der ersten Stützen (33) und eine Vielzahl der zweiten Stützen (35) stützt, wobei

der bewegliche Körper (31) von einem rotierenden Körper (10) in einer Weise gestützt wird, dass sich der bewegliche Körper (31) in der Umfangsrichtung bewegen kann.

4. Greifervorrichtung nach Anspruch 3, wobei eine oder beide von der ersten Stütze (33) und der zweiten Stütze (35) in Bezug auf den beweglichen Körper (31) anbringbar und abnehmbar bereitgestellt sind.

5. Greifervorrichtung nach Anspruch 3 oder 4, weiter umfassend eine Führung (31C, 37), die so konfiguriert ist, dass sie einen Bereich der Bewegung des beweglichen Körpers (31) reguliert, wobei die Führung (31C, 37) den Bereich der Bewegung des beweglichen Körpers (31) innerhalb eines Bereichs zwischen einer ersten Stützposition, in der die erste Stütze (33) den Hals (101) in Kontakt mit dem Hals stützt, und einer zweiten Stützposition, in der die zweite Stütze (35) den Hals (101) in Kontakt mit dem Hals stützt, reguliert.

6. Greifervorrichtung nach Anspruch 5, wobei die Führung (37) auch als Befestigungsmittel zum Fixieren des beweglichen Körpers (31) an dem rotierenden Körper (10) dient.

7. Greifervorrichtung nach einem der Ansprüche 3 bis 6, wobei

der bewegliche Körper (31) eine Vielzahl von in der Umfangsrichtung geteilten Segmenten (SG1, SG2, SG3, SG4) aufweist; und jedes der Segmente (SG1, SG2, SG3, SG4) von dem rotierenden Körper (10) in einer Weise gestützt wird, dass jedes der Segmente (SG1, SG2, SG3, SG4) die Bewegung in der Umfangsrichtung ausführen kann.

8. Greifervorrichtung nach Anspruch 7, wobei zwischen den Segmenten (SG1, SG2, SG3, SG4), die in der Umfangsrichtung aneinander angrenzen, ein Spalt (P31) bereitgestellt ist, der mindestens einer Distanz der Bewegung durch das Segment entspricht.

9. Greifervorrichtung nach einem der Ansprüche 3 bis 8, wobei der bewegliche Körper (31) einen Leichterungsabschnitt (31D) einschließt, der sich durch die Vorderseite und Rückseite des beweglichen Körpers (31) erstreckt.

**Revendications**

1. Dispositif de préhension disposé dans une capsuleuse (1), le dispositif de préhension comprenant :

   une pince (11) incluant une paire de pièces de préhension (12, 13) configurées pour saisir des cols (101) de contenants (100) ; et
   un support configuré pour supporter le col (101) du contenant (100), en contact avec le col (101), entre la paire de pièces de préhension (12, 13), **caractérisé en ce que**
   le support inclut un premier support (33) et un deuxième support (35) correspondant à l'un ou l'autre des contenants (100) ayant les cols (101) de différentes dimensions ;
   le premier support (33) et le deuxième support (35) sont disposés en alternance le long d'une direction circonférentielle, et
   les positions du premier support (33) et du deuxième support (35) dans la direction circonférentielle par rapport à la pince (11) peuvent être déplacées l'une par rapport à l'autre.

2. Dispositif de préhension selon la revendication 1, dans lequel

   l'un parmi le premier support (33) et le deuxième support (35) supporte le col (101), en contact avec le col entre la paire de pièces de préhension (12, 13); et
   l'autre parmi le premier support (33) et le deuxième support (35) est disposé entre les pinces (11) qui sont mutuellement adjacentes.

3. Dispositif de préhension selon la revendication 1 ou la revendication 2, comprenant en outre un corps mobile (31) configuré pour supporter une pluralité des premiers supports (33) et une pluralité des deuxièmes supports (35), dans lequel
   le corps mobile (31) est supporté par un corps rotatif (10) d'une manière telle que le corps mobile (31) peut se déplacer dans la direction circonférentielle.

4. Dispositif de préhension selon la revendication 3, dans lequel un ou les deux parmi le premier support (33) et le deuxième support (35) sont disposés de manière attachable et détachable par rapport au corps mobile (31).

5. Dispositif de préhension selon la revendication 3 ou revendication 4, comprenant en outre un guide (31C, 37) configuré pour réguler une plage du déplacement du corps mobile (31), dans lequel
   le guide (31C, 37) régule la plage du déplacement du corps mobile (31) dans une plage entre une première position de support à laquelle le premier support (33) supporte le col (101) en contact avec le col et une deuxième position de support à laquelle le deuxième support (35) supporte le col (101) en contact avec le col.

6. Dispositif de préhension selon la revendication 5, dans lequel le guide (37) sert également de moyen de fixation pour fixer le corps mobile (31) au corps rotatif (10).

7. Dispositif de préhension selon l'une quelconque des revendications 3 à 6, dans lequel

   le corps mobile (31) possède une pluralité de segments (SG1, SG2, SG3, SG4) divisés dans la direction circonférentielle ; et
   chacun des segments (SG1, SG2, SG3, SG4) est supporté par le corps rotatif (10) d'une manière telle que chacun des segments (SG1, SG2, SG3, SG4) peut effectuer le déplacement dans la direction circonférentielle.

8. Dispositif de préhension selon la revendication 7, dans lequel un espace (P31) correspondant à au moins une distance du déplacement par le segment est prévu entre les segments (SG1, SG2, SG3, SG4) qui sont mutuellement adjacents dans la direction circonférentielle.

9. Dispositif de préhension selon l'une quelconque des revendications 3 à 8, dans lequel le corps mobile (31) inclut une portion d'allègement (31D) qui s'étend à travers l'avant et l'arrière du corps mobile (31).

FIG. 1

# FIG. 2

# FIG. 3

# FIG. 4

# FIG. 5

# FIG. 6

(a)

SG1

33

12

13

P2

P1

P3

33

13

101S

35

12

P31

(b)

SG1

33

13

33

12

13

12

35

(c)

SG1

35

13

12

35

13

33

12

13

33

101L

C

# FIG. 7

# FIG. 8

FIG. 9

(a)

(b)

# FIG. 10

(a)

(b)

# FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5315731 B